(19) Europäisches Patentamt
European Patent Office
Office européen des brevets

(11) **EP 2 704 302 B1**

(12) **EUROPEAN PATENT SPECIFICATION**

(45) Date of publication and mention
of the grant of the patent:
**05.06.2019 Bulletin 2019/23**

(51) Int Cl.:
**H02M 3/335** *(2006.01)*    **B60L 9/08** *(2006.01)*

(21) Application number: **12182917.0**

(22) Date of filing: **04.09.2012**

(54) **Switching a DC-to-DC converter**

Schaltung eines Gleichstrom-Gleichstrom-Wandlers

Commutation d'un convertisseur CC-CC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.03.2014 Bulletin 2014/10**

(73) Proprietor: **ABB Schweiz AG**
**5400 Baden (CH)**

(72) Inventors:
• **Besselmann, Thomas**
**8050 Zürich (CH)**
• **Mester, Akos**
**5415 Nussbaumen (CH)**
• **Dujic, Drazen**
**5430 Wettingen (CH)**

(74) Representative: **Qip Patentanwälte**
**Dr. Kuehn & Partner mbB**
**Goethestraße 8**
**80336 München (DE)**

(56) References cited:
**EP-A2- 0 820 893      DE-A1-102010 044 322**
**JP-A- 2011 024 294      US-A1- 2005 254 273**
**US-A1- 2012 161 717**

• **HONGLIN ZHOU ET AL: "Modeling and Control for a Bidirectional Buck Boost Cascade Inverter", IEEE TRANSACTIONS ON POWER ELECTRONICS, IEEE SERVICE CENTER, PISCATAWAY, NJ, US, vol. 27, no. 3, 1 March 2012 (2012-03-01), pages 1401-1413, XP011406672, ISSN: 0885-8993, DOI: 10.1109/TPEL.2010.2103957**
• **ZAHRA MALEKJAMSHIDI ET AL: "Comparative analysis of ANN and SSM controllers in a ZVCS-Full Bridge Series-Parallel Resonant DC-DC converter", POWER ELECTRONICS AND DRIVE SYSTEMS (PEDS), 2011 IEEE NINTH INTERNATIONAL CONFERENCE ON, IEEE, 5 December 2011 (2011-12-05), pages 643-647, XP032112424, DOI: 10.1109/PEDS.2011.6147319 ISBN: 978-1-61284-999-7**

## Description

FIELD OF THE INVENTION

The invention relates to a method for controlling a DC-to-DC converter, a controller of a DC-to-DC converter and a modular converter.

BACKGROUND OF THE INVENTION

Electrical trains or trams may have a modular converter that comprises a plurality of converter cells that produce from an AC input voltage a DC output voltage that is supplied to other electrical installations on-board, for example to one or more electrical motors. Usually, the AC input voltage is supplied from an overhead line.

The converter cells of the modular converter may comprise a resonant DC-to-DC converter, in which a DC-to-AC converter on the line side is connected via a resonant transformer with an AC-to-DC converter on the motor side. Both the DC-to-AC converter and the AC-to-DC converter may be active converters with controllable semiconductor switches.

For example, the semiconductor switches of the DC-to-DC converter may be switched with a fixed switching frequency and 50 % duty cycle. Depending on the direction of power flow through the modular converter, either the semiconductor switches of the primary line side or the secondary motor side of the DC-to-DC converter are switched. This may provide zero voltage switching (ZVS) during turn-on of the semiconductor switches, and low current switching during turn-off. As the switching losses depend on voltage and current during the switching, this switching strategy may result in low switching losses and thus in a high-efficiency DC-to-DC conversion at nominal power ratings.

However, when this switching method is used under light-load or no-load conditions, the switching losses of the DC-to-DC converter stay approximately the same, but less power is transferred, and thus the efficiency decreases. The extreme case is no load, when no power needs to be transferred by the DC-to-DC converter. However, a circulating current, which is needed to support ZVS, leads to the presence of switching losses in almost the same amount.

A DC-to-DC converter is for example known from DE 10 2010 044 322 A1.

DESCRIPTION OF THE INVENTION

It is an object of the invention to enhance the efficiency of a DC-to-DC converter under light-load or no-load conditions.

This object is achieved by the subject-matter of the independent claims. Further exemplary embodiments are evident from the dependent claims and the following description.

An aspect of the invention relates to a method for controlling a DC-to-DC converter. The DC-to-DC converter may be part of a converter cell of a modular converter, which may be used for supplying electrical motors of a train with power.

According to an embodiment of the invention, the DC-to-DC converter comprises a DC-to-AC (sub)converter and an AC-to-DC (sub)converter connected in series with a transformer and a capacitor, both the DC-to-AC converter and the AC-to-DC converter comprising semiconductor switches. The DC-to-DC converter may be a resonant converter with the transformer being part of the resonant tank.

According to an embodiment of the invention, the method comprises the steps of: determining (or measuring) a DC input voltage and a DC output voltage of the DC-to-DC-converter; determining whether a switching condition based on the DC input voltage and the DC output voltage is fulfilled; and generating a switching signal with switching pulses for switching the semiconductor switches of at least one of the DC-to-AC converter and the AC-to-DC converter, wherein the generation of switching pulses is blocked, when the switching condition is not fulfilled.

For example, the switching signal may comprise a two level switching signal for each semiconductor switch to be switched. When the signal is off, the semiconductor switch is also off. Conversely, when the signal is on, the semiconductor switch is also on. A switching pulse may be a part of the switching signal in which the switching signal is on.

On both (first and second) sides of the DC-to-DC converter, the voltages may be measured and a switching condition that receives the two voltages as input values may be evaluated. When the condition is fulfilled, a switching signal with switching pulses may be produced. When the condition is not fulfilled, a switching signal which is off may be produced. The first side of the DC-to-DC converter may be an input side or line side. The second side of the DC-to-DC converter may be an output side or motor side.

The switching condition may be based on the load on the DC-to-DC converter, which may directly or indirectly contribute to the switching condition. With the adaptive control method, the DC-to-DC converter may be energy-efficiently switched under light-load or no-load conditions.

Instead of switching the DC-to-DC converter within a modular converter with a constant frequency, the number and shape of switching pulses sent to the DC-to-DC converter may be adapted based on the DC voltages on both sides of the DC-to-DC converter, and optionally on the DC-to-DC converter current.

With the control method, an energy-efficient switching strategy at varying power ratings and not only at a nominal operating point may be implemented in a modular converter. The control method ensures a stable operation of the DC-to-DC converter, i.e. deviations of the DC voltages from their reference values may be counteracted, such that in a steady-state operation, the ratio between both DC voltages is maintained. The control method may work bi-directional, i.e. may support a power flow from the first side to the second side, and vice versa. Furthermore, the control method may reflect the modular design of the modular converter by avoiding communication between the converter cells, and may adjust themselves to a varying number of converter cells (such that availability of the converter arrangement is sustained if one cell is failing).

According to an embodiment of the invention, the switching signal comprises regular switching pulses starting regularly with respect to a time period of the switching signal. The regular switching pulses may have a length of half of the switching period. For example, the switching pulses may start at 0 % of the time period and end at 50 % of the time period, or start at 50 % of the time period and end at 100 % of the time period.

According to an embodiment of the invention, the switching signal comprises reduced switching pulses that are shorter than the regular switching pulses. The reduced switching pulses may have half of the length of the regular switching pulses. For example, the reduced switching pulses may start at 25 % of the time period and end at 50 % of the time period, or start at 75 % of the time period and end at 100 % of the time period.

According to an embodiment of the invention, a reduced switching pulse is generated, when passing from a blocked switching signal to an unblocked switching signal. After a section of the switching signal with no switching pulses (in which the switching signal is blocked), a sequence or train of switching pulses may begin with a reduced switching pulse, which may or may not be followed by at least one regular switching pulse. It may be possible that all sequences of switching pulses start with a reduced switching pulse.

According to an embodiment of the invention, the switching signal comprises switching pulses for switching an upper semiconductor switch of one of the subconverters and switching pulses for switching a lower semiconductor switch of the subconverter. Usually, the switching pulses of the two semiconductor switches are alternating with each other, i.e. the upper semiconductor switch is switched on, when the lower semiconductor switch is switched off, and vice versa.

The number of reduced switching pulses for the upper semiconductor switch may equal the number of reduced switching pulses for the lower semiconductor switch and/or the number of full switching pulses for the upper semiconductor switch may equal the number of full switching pulses for the lower semiconductor switch. In such a way, the load on the two semiconductor switches may be balanced.

According to the invention, the switching condition is based on the difference of the DC input voltage and the DC output voltage. In such a way, the switching control method supports the balancing of the DC voltages on the first and the second side of the DC-to-DC converter. Further, the switching condition is based on an output current of the DC-to-DC converter and/or a transferred power of the DC-to-DC converter.

According to an embodiment of the invention, a current through the DC-to-DC converter, for example a DC output current is determined or measured. The switching condition may be based on the current and/or the transferred power calculated from the current. The transferred power may be based on the product of a DC voltage and the corresponding current.

In such way, a control method for switching pulse generation of a sequence of full and reduced switching pulses for the DC-to-DC converter may be implemented. The generation of the switching pulses may be based on the first and second DC voltages and optionally on the power transferred by the modular converter.

According to an embodiment of the invention, the method further comprises the steps of: generating an unfiltered switching signal (for example with a pulse generator); and forming the switching signal applied to the semiconductors switches by blocking the unfiltered switching signal, when the switching condition is not fulfilled (for example by filtering with a pulse filter). A pulse generator may produce a regular, unfiltered switching signal, which is filtered by a pulse filter that blocks the switching pulses, when the switching condition is not fulfilled.

According to an embodiment of the invention, the method further comprises the steps of: blocking the unfiltered switching signal with a state machine having at least one unblocking state in which the unfiltered signal is not blocked, and at least one blocking state in which the unfiltered signal is blocked; and transitioning the state machine from an unblocking state to a blocking state, when the switching condition is not fulfilled, and transitioning the state machine from a blocking state to an unblocking state, when the switching condition is fulfilled. The pulse filter may comprise an internal state machine, which has state transitions that are based on the fulfillment of the switching transition.

According to an embodiment of the invention, the method further comprises the steps of: transitioning the state machine from a first unblocking state to a first blocking state, when the switching condition is not fulfilled at the middle of a time period of the unfiltered switching signal; transitioning the state machine from the first blocking state to a second unblocking state, when the switching condition is fulfilled at three quarters of the time period; transitioning the state machine from the second unblocking state to a second blocking state, when the switching condition is not fulfilled at the end of the time period; and transitioning the state machine from the second blocking state to the first unblocking state, when the switching condition is fulfilled at one quarter of the time period.

The state machine may comprise four states which alternately block and unblock the unfiltered switching signal in such a way, that alternately reduced switching pulses are generated for the upper and the lower semiconductor switch of one subconverter of the DC-to-DC converter.

A further aspect of the invention relates to a controller of a DC-to-DC converter, wherein the controller is adapted for performing the method as described in the above and in the following. The controller may be a local controller or control unit associated with a converter cell of the modular converter, or may be a main controller for the modular converter, which is adapted for controlling more than one or all converter cells of the modular converter.

According to an embodiment of the invention, the controller comprises a pulse generator for generating an unfiltered switching signal; and a pulse filter for blocking the unfiltered switching signal, when the switching condition is not fulfilled.

The pulse generator may generate an unfiltered switching signal with intermittent pulses, for example with a normal PWM pattern. The unfiltered switching signal may be used during normal mode (normal load) operation of the modular converter.

The pulse filter may omit or pass on the switching pulses of the unfiltered signal based on the measured or estimated values of the first and second DC voltage and optionally on the transferred power.

A further aspect of the invention relates to a modular converter for supplying at least one electrical motor with a DC output voltage. For example, the electrical motor may be the motor of a train or a tram. It has to be understood that features of the method as described in the above and in the following may be features of the modular converter and the controller as described in the above and in the following, and vice versa.

According to an embodiment of the invention, the converter comprises a plurality of converter cells, which are connected in series on a first side and which are connected in parallel on a second side. The first side of a converter cell may be an input side or line side. The second side of the converter cell may be an output side or motor side.

Each converter cell may comprise an AC-to-DC converter for converting a first side AC voltage into a first side DC voltage, and a DC-to-DC converter for converting the first side DC voltage into a second side DC voltage. The converter further comprises a controller as described in the above and in the following for controlling at least one of the DC-to-DC converters of the converter cells.

The AC-to-DC converter may be a full-bridge or half-bridge converter, which is adapted for converting a first side AC voltage into a first side DC voltage, or vice versa. The DC-to-DC converter may be a resonant converter, which is adapted for converting the first DC voltage into a second DC voltage, or vice versa. The controller or control unit may generate and provide switching signals to the AC-to-DC converter and to the DC-to-DC converter.

According to an embodiment of the invention, the modular converter comprises local controllers, each local controller associated with a converter cell and adapted for controlling the DC-to-DC converter of the converter cell. The control method may be implemented separately for each converter cell on a local cell controller. The control method may generate the switching signal for the DC-to-DC converter of a single converter cell.

According to an embodiment of the invention, the modular converter comprises a main controller, which is adapted for controlling at least two DC-to-DC converters of the converter cells. The control method may be implemented for several converter cells on a main controller or central controller. The control method may generate the switching signal of the DC-to-DC converters of a plurality of converter cells.

It has to be understood that a subset of the converter cells of the modular converter may be controlled by using the control method, as described in the above and in the following, and a subset of the converter cells may be controlled in a different form.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 schematically shows a converter according to an embodiment of the invention.

Fig. 2 schematically shows a controller according to an embodiment of the invention.

Fig. 3 shows a flow diagram for a method for controlling a converter according to an embodiment of the invention.

Fig. 4 schematically shows a state machine according to an embodiment of the invention.

Fig. 5 shows switching signals according to an embodiment of the invention.

Fig. 6 shows a diagram with switching losses of a converter according to an embodiment of the invention.

In principle, identical parts are provided with the same reference symbols in the figures.

## DETAILED DESCRIPTION OF EXEMPLARY EMBODIMENTS

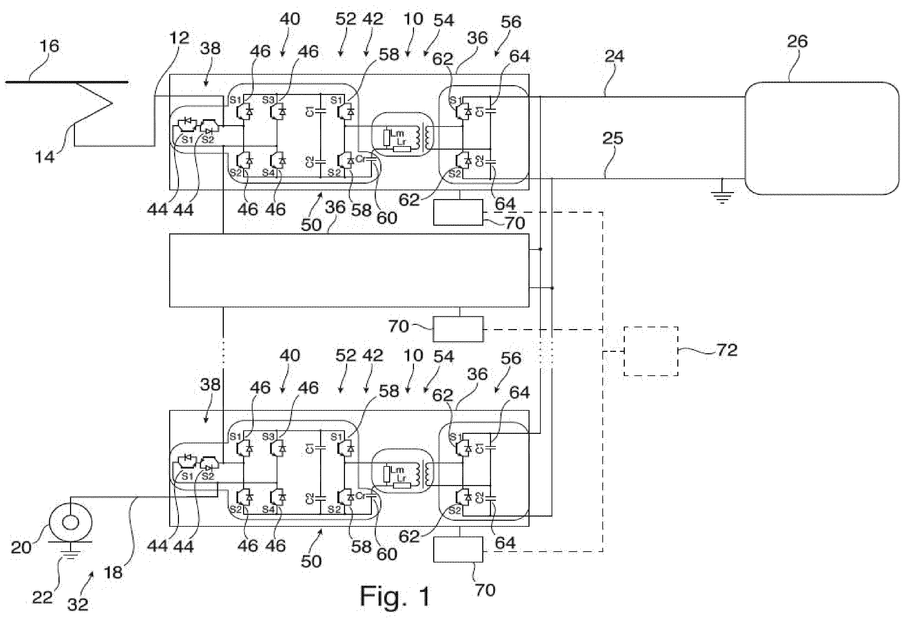

Fig. 1 shows a converter 10 for an electric train or tram. The converter has an input 12 that is connected via an pantograph 14 with a catenary or overhead line 16, which supplies the converter 10 with an medium-voltage AC input voltage. The converter 10 has an earthing point 18, which connects the converter 10 via the wheels 20 of the train or tram to the earth 22.

The converter 10 has a positive DC output 24 and a negative DC output 25, which supplies a load 26 of the train or tram with a DC output voltage of about 1 kV. The load 26 may comprise an electric DC motor, another converters and/or an auxiliary power supply. In general, the converter 10 is an AC-to-DC converter with an AC side 32 providing the input 12 and the earthing point 18, and a DC side 34 providing the output phases 24, 25.

The converter 10 has a modular structure and comprises a plurality of (for example nine) four-terminal converter cells 36. The converter cells 36 are connected in series on the AC side 32, i.e. connected in series between the input 12 and the earthing point 18 and in parallel on the DC side 34, i.e. connected in parallel to the two outputs 24, 25.

Only the first and the last converter cell 36 are shown in detail.

Each converter cell 36 comprises a short-circuit switch 38, an AC-to-DC converter 40 and a DC-to-DC converter 42.

The short-circuit switches 38 of a converter cell 36 is connected in series with the short-circuit switches 38 of the other converter cells 36 and comprises two power semiconductor switches 44 connected in series in opposite directions. In general, the short-circuit switches 38 may comprise other kind of switches, for example, an electromechanical switch.

The AC-to-DC converter 40 is an active front end with four power semiconductor switches 46 connected into an H-bridge. The AC-to-DC converter 40 and the DC-to-DC converter 42 are connected via a DC link, which comprises a capacitance 50. The output of the DC-to-DC converter 42 of a converter cell 36 is connected in parallel with the outputs of the DC-to-DC converters 42 of the other converter cells 36.

The DC-to-DC converter 42 is a resonant converter and comprises a first side resonant (sub)converter 52, a resonant tank or transformer 54, and a second side resonant (sub)converter 56, which are connected in series.

The first side resonant converter 52 is connected to the DC link 50 and comprises an upper and a lower power semiconductor switch 58 connected in series. One input of the primary side of the transformer 54 is connected between the two power semiconductor switches 58. The other input of the primary side of the transformer 54 is connected via a capacitor 60 to the negative side of the DC-link 50.

Also the second side resonant converter 56 comprises an upper and a lower power semiconductor switch 62 connected in series, which are connected in parallel with a second DC link with two capacitors 64connected in series. One input of the secondary side of the transformer 54 is connected between the two power semiconductor switches 62. The other input of the primary side of the transformer 54 is connected between the capacitors 64. Alternative connections are also possible.

All the power semiconductor switches 44, 46, 58, 62 may be IGBTs.

Each converter cell 36 comprises a local controller 70, which is adapted to control the switches 44, 46, 58, 62 of the respective converter cell 36. The local controllers 70 are communicatively interconnected with a main controller 72, which is adapted to control the local controller 70.

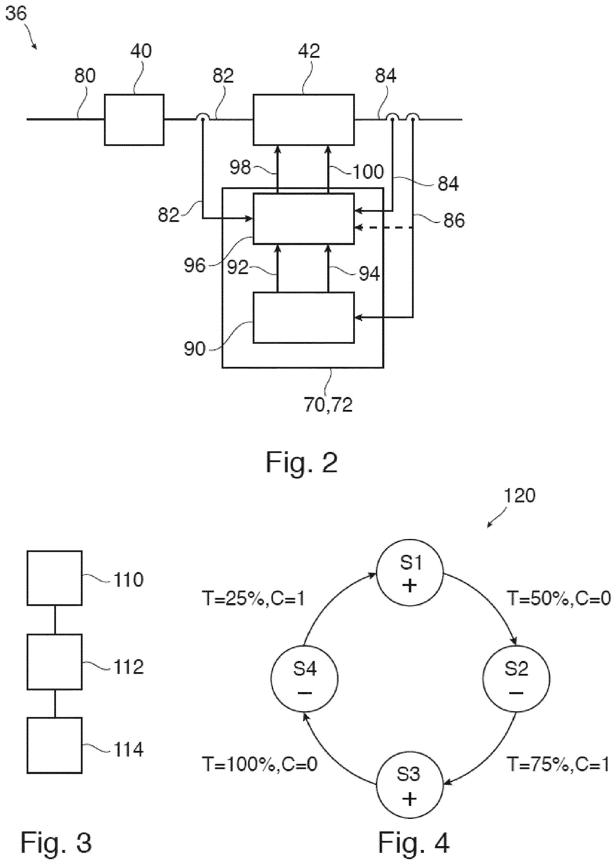

Fig. 2 schematically shows a converter cell 36 together with a controller 70, 72. It has to be noted that the switching method as explained in the above and in the following and shown in Fig 4 may be performed by a local controller 70 or by the main controller 72.

The first side AC voltage 80 is converted by an appropriate switching of the AC-to-DC converter 40 to a first DC voltage 82. This first DC voltage 82 is converted by the DC-to-DC converter 42 to a second DC voltage 84.

Fig. 3 shows a flow diagram for a method for controlling a converter as shown in Fig. 2. In a step 110, the first DC voltage 82 is measured on the first or line side and input to the controller 70, 72. Also in step 110, the second DC voltage 84 and the second DC current 86 are measured on the second or motor side, and input to the controller 70, 72.

Depending on the mode of operation (energy flow from the first DC link 50 into second DC link 64, 66, or vice versa) of the converter 10, the second DC current 86 can be either positive or negative.

The controller 70, 72 comprises a pulse generator 90, which is adapted to generate pulse width modulated switching signals 92, 94.

In step 112, the pulse generator 90 generates the pulse width modulated switching signals 92, 94 based on the second DC current 86. For example, the pulse generator 90 generates switching pulses with a constant switching frequency and a 50 % duty cycle.

The output switching signal 92 of the pulse generator 90 is used for controlling the upper and lower power semiconductor switch 58 of the first side resonant converter 52 connected to the first, line side DC link 50. The output switching signal 94 of the pulse generator 90 is used for controlling the upper and lower power semiconductor switch 62 of the second side resonant converter 56 connected to the second, motor side DC link 64, 66.

Depending on the mode of operation of the converter 10, i.e. the direction of the second side DC current 86, the pulse generator 90 may generate intermittent pulses 92 for the upper and lower semiconductor 58 of the first side of the DC-to-DC converter 42 and may keep the semiconductors 62 of the second side of the DC-to-DC converter 42 switched off by generating appropriate pulses 9, or vice versa.

The controller 70, 72 comprises a pulse filter 96, which receives and filters the switching signals 92, 94 from the pulse generator 90.

In step 114, based on the measured first and second DC voltages 82, 84 and optionally based on the measured second DC current 86, the number of switching pulses may be reduced by the pulse filter 96.

Depending on the values of the first DC voltage 82 and the second DC voltage 84, the pulse filter 96 decides repeatedly between one of the options of (1) passing through pulses of the switching signal 92, 94 and (2) omitting pulses of the switching signal 92, 94. Optionally, the decision is also based on the energy flow of the controller 10, e.g. by taking into account the second side DC current 86.

By omitting and filtering pulses, the pulse filter 96 generates a filtered switching signal 98 from the switching signal 92, which is used for controlling the upper and lower power semiconductor switch 58, and a filtered switching signal 100 from the switching signal 94, which is used for controlling the upper and lower power semiconductor switch 62.

Fig. 4 shows a state machine 120 that may be part of the pulse filter 96.

The state machine 120 comprises four modes, S1, S2, S3, and S4.

In the modes S1 and S3, the switching signals 92, 94 are passed through the pulse filter 96. The passing through is indicated by a "+".

In the modes S2 and S4, the switching signals 92, 94 are blocked and switching pulses may be omitted from the switching signals 92, 94. The blocking is indicated by a "-". When the switching signals 92, 94 are blocked, the respective power semiconductor switches 58, 62 are switched off, such that no switching losses occur.

The decision to move from one mode to the next mode is based on the time $T$ in the switching period, and on a switching condition $C$. The condition $C$ may be a function of the measured signals: first side DC voltage $U_{DC1}$, 82, second side DC voltage $U_{DC2}$, 84 and optionally the current $I_{DC2}$, 86 flowing through the converter 10.

An example for such a switching condition $C$ may be that the difference (or the absolute value of the difference) between the first side and the second side DC voltages $U_{DC1}$ - $U_{DC2}$ is bigger than a predefined threshold.

As an explicit example, the condition C may be

$$k_1(U_{DC1} - U_{DC2}) + k_2 I_{DC2} U_{DC2} \geq k_3$$

wherein $k_1$, $k_2$, and $k_3$ are suitable constants. The first term on the left hand side of condition $C$ depends on the difference of the first and second DC voltages 82, 84. The second term depends on the power flow through the DC-to-DC converter 42.

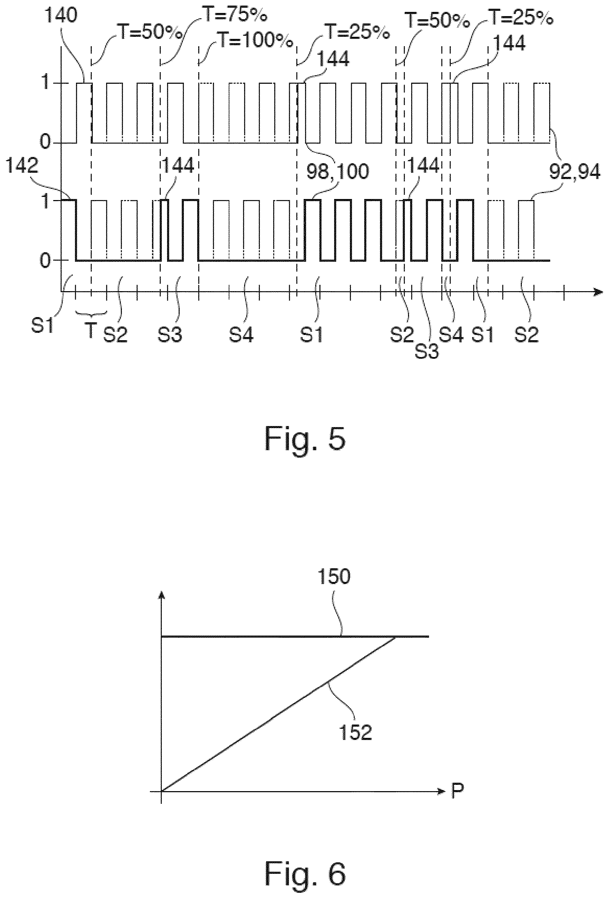

The state machine 120 will be explained also with respect to Fig. 5, which shows an example of possible switching signals based on the omitting or reducing of switching pulses.

The upper dashed and solid lines represent the switching signal 92, 94, 98, 100 for the upper semiconductor 58, 62, and the lower dashed and solid lines represent the switching signal 92, 94, 98, 100 for the lower semiconductors 58, 62.

Depending on the mode of operation (energy flow) of the converter 10, the dashed lines indicate the switching signal 92 for the upper and lower semiconductors 58, or the switching signal 94 for the upper and lower semiconductors 62.

Also depending on the mode of operation (energy flow) of the converter 10, the solid lines indicate the switching signal 98 for the upper and lower semiconductors 58, or the switching signal 100 for the upper and lower semiconductors 62.

From the dashed lines it can be seen that the pulse generator 90 generates switching pulses with a constant switching frequency with a period $T$ and a 50 % duty cycle.

For example, a regular (full) switching pulse 140 for the upper semiconductor 58, 62 begins at $T = 0$ %, the respective switching signal 92, 94 is switched on ("1") and the upper semiconductor is switched to a conducting state. The regular switching pulse 140 ends at $T = 50$ %, the respective switching signal 92, 94 is switched off ("0"), and the upper semiconductor is switched to a blocking state. The regular (full) switching pulse 142 of the lower semiconductor 58, 62 begins at $T = 50$ % and ends at $T = 100$ %,

Due to the switching method implemented with the state machine 120, also reduced, half pulses 144 appear alternatively at the upper and the lower semiconductor switching signal 98, 100. Due the usage of half pulses 144, the adaption of the current oscillations to the resonant cycle of the resonant converter 42 is faster and the losses are lower.

Furthermore, the number of half pulses 144 for the lower semiconductors is equal to the number of half pulses 144 for the upper semiconductors, and the same amount of energy is transferred by the upper and lower semiconductor switches.

The half pulses 144 either initiate a pulse train (a sequence of switching pulses) or they may appear in the middle of a pulse train. Depending on the input to the pulse filter 96, it is also possible that a half pulse 144 is followed by a single switching pulse or by a pulse break (in which the signals 92, 94 are blocked).

When the state machine 120 is in the mode S1, the switching signals 92, 94 from the pulse generator 90 are passed through, and C is checked in the middle ($T$ =

*50* %) of each switching period *T*. If the condition *C* is not fulfilled (*C = 0*), the state machine 120 moves to the mode S2.

When the state machine 120 is in the mode S2, the switching signals 92, 94 from the pulse generator 90 are blocked, and C is checked at *T = 75* % of each switching period *T*. If the condition *C* is fulfilled (*C = 1*), the state machine 120 moves to the mode S3.

When the state machine 120 is in the mode S3, the switching signals 92, 94 from the pulse generator 90 are passed through, and *C* is checked in the beginning (*T = 100* %) of each switching period *T*. If the condition *C* is not fulfilled (*C = 0*), the state machine 120 moves to the mode S4.

When the state machine 120 is in the mode S4, the switching signals 92, 94 from the pulse generator 90 are blocked, and *C* is checked at *T = 25* % of each switching period *T*. If the condition *C* is fulfilled (*C = 1*), the state machine 120 moves to the mode S4.

Fig. 6 shows a schematic comparison of the switching losses 150 of the converter 10 without the use of the pulse filter 96, and the switching losses 152 when using the pulse filter 96. While the switching losses 150 are nearly constant for the 50 % duty cycle operation, filtering the switching pulses enables switching losses 152 which are nearly proportional to the transmitted power *P*. Therefore, it is possible to keep the efficiency of the DC-to-DC converter 42 high under light-load and no-load conditions, in contrast to the 50 % duty cycle scheme.

With the control method for switching the DC-to-DC converter 42, lower switching losses at light-load or no-load condition may be achieved and thus a higher efficiency compared to the PWM pulse pattern used during the normal operation with higher loads may be achieved. (Under no-load condition, the pulse filter 96 will stay persistently in mode S2 or S4.)

The control method converges to the normal PWM pulse pattern (50 % duty cycle) operation for normal-load operation. No switching between different control strategies is needed. (Under normal conditions, the pulse filter 96 will stay persistently in mode S1 or S3.)

The DC-to-DC converter 42 of each converter cell 36 of the modular converter 10 may be controlled independently of the others, no inter-level communication needed.

In case of failure of one converter cell 36, the other converter cells 36 will compensate by increasing their switching rate. This happens automatically and instantaneously, no additional logic needed.

No additional measurement may be needed compared to the existing solution. For example the first side DC voltage 82 may be measured for safety reasons.

In the initial phase, the DC-to-DC converters 42 may have to be ramped up the stationary operation. After the stationary operation is reached, the control method allows instantaneous start and stop of the switching pulses, no ramping needed.

The control method may be seen as a continuous adaptation of the switching strategy for different power levels.

**Claims**

1. A method for controlling a DC-to-DC converter (42), the DC-to-DC converter (42) comprising a DC-to-AC converter (52) and an AC-to-DC converter (56) connected in series with a transformer (54), both the DC-to-AC converter and the AC-to-DC converter comprising semiconductor switches (58, 62); the method **characterized by** the steps of:

   determining a DC input voltage (82) and a DC output voltage (84) of the DC-to-DC-converter (42);
   determining whether a switching condition (*C*) based on the DC input voltage (82) and the DC output voltage (84) is fulfilled;
   generating a switching signal (98, 100) with switching pulses (140, 142) for switching the semiconductor switches (58, 62) of at least one of the DC-to-AC converter (52) and the AC-to-DC converter (56), wherein the generation of switching pulses (140, 142) is blocked, when the switching condition (*C*) is not fulfilled,
   wherein the switching condition (*C*) is based on the difference of the DC input voltage (82) and the DC output voltage (84), and
   wherein the switching condition (*C*) is based on an output current (86) of the DC-to-DC converter (42) and/or a transferred power of the DC/DC converter (42).

2. The method of claim 1, wherein the switching signal (98, 100) comprises regular switching pulses (140, 142) starting regularly with respect to a time period (*T*) of the switching signal; and/or wherein the regular switching pulses (140, 142) have a length of half of the switching period (*T*).

3. The method of claim 2, wherein the switching signal (98, 100) comprises reduced switching pulses (144) that are shorter than the regular switching pulses; and/or wherein the reduced switching pulses (144) have half of the length of the regular switching pulses.

4. The method of claim 3, wherein a reduced switching pulse (144) is generated, when passing from a blocked switching signal to an unblocked switching signal.

5. The method of one of the preceding claims, wherein the switching signal (98, 100) comprises switching pulses (140) for switching an upper semiconductor switch and switching pulses (142) for switching a lower semiconductor switch;

wherein the number of reduced switching pulses (144) for the upper semiconductor switch equals the number of reduced switching pulses for the lower semiconductor switch; and or

wherein the number of full switching pulses (144) for the upper semiconductor switch equals the number of full switching pulses for the lower semiconductor switch.

6. The method of one of the preceding claims, further comprising the steps of:

generating an unfiltered switching signal (92, 94);

forming the switching signal (98, 100) applied to the semiconductors switches (58, 62) by blocking the unfiltered switching signal, when the switching condition (*C*) is not fulfilled.

7. The method of claim 6, further comprising the steps of:

blocking the unfiltered switching signal (92, 94) with a state machine (120) having at least one unblocking state (S1, S3), in which the unfiltered signal is not blocked and at least one blocking state (S2, S4) in which the unfiltered signal is blocked;

transitioning the state machine (120) from an unblocking (S1, S3) state to a blocking state (S2, S4), when the switching condition (*C*) is not fulfilled and transitioning the state machine from an blocking state to an unblocking state, when the switching condition is fulfilled.

8. The method of claim 7, the method further comprising the steps of:

transitioning the state machine (120) from a first unblocking state (S1) to a first blocking state (S2), when the switching condition (*C*) is not fulfilled at the middle of a time period (*T*) of the unfiltered switching signal (92, 94);

transitioning the state machine (120) from the first blocking state (S2) to a second unblocking state (S3), when the switching condition (*C*) is fulfilled at three quarters of the time period (*T*);

transitioning the state machine (120) from the second unblocking state (S3) to a second blocking state (S4), when the switching condition (*C*) is not fulfilled at the end of the time period (*T*);

transitioning the state machine (120) from the second blocking state (S4) to the first unblocking state (S1), when the switching condition (*C*) is fulfilled at one quarter of the time period (*T*).

9. A controller (70, 72) of a DC-to-DC converter (42), wherein the controller is adapted for performing the method of one of claims 1 to 8.

10. The controller (70, 72) of claim 9, comprising:

a pulse generator (90) for generating an unfiltered switching signal (92, 94);

a pulse filter (96) for blocking the unfiltered switching signal, when the switching condition (*C*) is not fulfilled.

11. A modular converter (10) for supplying at least one electrical motor (26) with a DC output voltage (84), wherein the modular converter (10) comprises a plurality of converter cells (36), which are connected in series on a first side and which are connected on a second side;

wherein each converter cell (36) comprises an AC-to-DC converter (40) for converting a first side AC voltage (80) into a first side DC voltage (82), and a DC-to-DC converter (42) for converting the first side DC voltage (82) into a second side DC voltage (84);

wherein the modular converter (10) comprises a controller (70, 72) according to one of the claims 9 or 10 for controlling at least one of the DC-to-DC converters (42) of the converter cells (36).

12. The modular converter (10) of claim 11, wherein the modular converter (10) comprises local controllers (70), each local controller associated with a converter cell (36) and adapted for controlling the DC-to-DC converter (42) of the converter cell (36).

13. The modular converter (10) of claim 11 or 12, wherein the modular converter (10) comprises a main controller (72), which is adapted for controlling at least two DC-to-DC converters (42) of the converter cells (36).

**Patentansprüche**

1. Verfahren zum Steuern eines Gleichstrom-Gleichstrom-Umrichters (42),

wobei der Gleichstrom-Gleichstrom-Umrichter (42) einen Gleichstrom-Wechselstrom-Umrichter (52) und einen Wechselstrom-Gleichstrom-Umrichter (56) aufweist, die in Serie mit einem Transformator (54) verbunden sind, wobei sowohl der Gleichstrom-Wechselstrom-Umrichter als auch der Wechselstrom-Gleichstrom-Umrichter Halbleiterschalter (58, 62) aufweisen;

das Verfahren **gekennzeichnet durch** die Schritte zum:

Ermitteln einer Gleichstromeingangsspannung (82) und einer Gleichstromausgangsspannung (84) des Gleichstrom-Gleichstrom-Umrichters (42);

Ermitteln ob eine Schaltungsbedingung (C) basierend auf der Gleichstromeingangsspannung (82) und der Gleichstromausgangsspannung (84) erfüllt ist;

Erzeugen eines Schaltsignals (98, 100) mit Schaltpulsen (140, 142) zum Schalten der Halbleiterschalter (58, 62) mindestens eines des Gleichstrom-Wechselstrom-Umrichters (52) und des Wechselstrom-Gleichstrom-Umrichters (56), wobei die Erzeugung von Schaltpulsen (140, 142) blockiert wird, wenn die Schaltbedingung (C) nicht erfüllt ist,

wobei die Schaltbedingung (C) auf der Differenz der Gleichstromeingangsspannung (82) und der Gleichstromausgangsspannung (84) basiert und

wobei die Schaltbedingung (C) auf einem Ausgangsstrom (86) des Gleichstrom-Gleichstrom-Umrichters (42) und/oder auf einer übertragenen Leistung des Gleichstrom-Gleichstrom-Umrichters (42) basiert.

2. Verfahren nach Anspruch 1,
wobei das Schaltsignal (98, 100) reguläre Schaltpulse (140, 142) aufweist, die regulär in Bezug auf eine Zeitdauer (*T*) des Schaltsignals beginnen; und/oder
wobei die regulären Schaltpulse (140, 142) eine halbe Länge der Schaltdauer (*T*) haben.

3. Verfahren nach Anspruch 2,
wobei das Schaltsignal (98, 100) verringerte Schaltpulse (144) aufweist, die kürzer sind als die regulären Schaltpulse; und/oder
wobei die verringerten Schaltpulse (144) die halbe Länge der regulären Schaltpulse haben.

4. Verfahren nach Anspruch 3,
wobei ein reduzierter Schaltpuls (144) erzeugt wird, wenn von einem blockierten Schaltsignal zu einem unblockierten Schaltsignal übergegangen wird.

5. Verfahren nach einem der vorangehenden Ansprüche,
wobei das Schaltsignal (98, 100) Schaltpulse (140) zum Schalten eines oberen Halbleiterschalters und Schaltpulse (142) zum Schalten eines unteren Halbleiterschalters aufweist;
wobei die Zahl verringerter Schaltpulse (144) für den oberen Halbleiterschalter der Zahl verringerter Schaltpulse für den unteren Halbleiterschalter gleich ist; und/oder
wobei die Zahl von vollständigen Schaltpulsen (144) für den oberen Halbleiterschalter der Zahl von vollständigen Schaltpulsen für den unteren Halbleiterschalter gleich ist.

6. Verfahren nach einem der vorangehenden Ansprüche, ferner aufweisend die Schritte zum:

Erzeugen eines ungefilterten Schaltsignals (92, 94) ;
Bilden des Schaltsignals (98, 100), das auf die Halbleiterschalter (58, 62) angewendet wird, durch Blockieren des ungefilterten Schaltsignals, wenn die Schaltbedingung (C) nicht erfüllt ist.

7. Verfahren nach Anspruch 6, ferner aufweisend die Schritte zum:

Blockieren des ungefilterten Schaltsignals (92, 94) mit einer Zustandsmaschine (120) mit mindestens einem unblockierten Zustand (S1, S3), in dem das ungefilterte Signal nicht blockiert ist, und mindestens einem blockierten Zustand (S2, S4), in dem das ungefilterte Signal blockiert ist;
Überführen der Zustandsmaschine (120) von einem unblockierten (S1, S3) Zustand zu einem blockierten Zustand (S2, S4), wenn die Schaltbedingung (C) nicht erfüllt ist und Überführen der Zustandsmaschine von einem blockierten Zustand zu einem unblockierten Zustand, wenn die Schaltbedingung erfüllt ist.

8. Verfahren nach Anspruch 7, das Verfahren ferner aufweisend die Schritte zum:

Überführen der Zustandsmaschine (120) von einem ersten unblockierten Zustand (S1) zu einem ersten blockierten Zustand (S2), wenn die Schaltbedingung (C) bei der Mitte einer Zeitdauer (*T*) des ungefilterten Schaltsignals (92, 94) nicht erfüllt ist;
Überführen der Zustandsmaschine (120) vom ersten blockierten Zustand (S2) zu einem zweiten unblockierten Zustand (S3), wenn die Schaltbedingung (C) bei dreiviertel der Zeitdauer (*T*) erfüllt ist;
Überführen der Zustandsmaschine (120) vom zweiten unblockierten Zustand (S3) zu einem zweiten blockierten Zustand (S4), wenn die Schaltbedingung (C) am Ende der Zeitdauer (*T*) nicht erfüllt ist;
Überführen der Zustandsmaschine (120) vom zweiten blockierten Zustand (S4) zum ersten unblockierten Zustand (S1), wenn die Schaltbedingung (C) bei einem viertel der Zeitdauer (*T*) erfüllt ist.

9. Steuerung (70, 72) eines Gleichstrom-Gleichstrom-Umrichters (42), wobei die Steuerung angepasst ist, das Verfahren nach einem der Ansprüche 1 bis 8 auszuführen.

**10.** Steuerung (70, 72) nach Anspruch 9, aufweisend:

einen Pulserzeuger (90) zum Erzeugen eines ungefilterten Schaltsignals (92, 94);
einen Pulsfilter (96) zum Blockieren des ungefilterten Schaltsignals, wenn die Schaltbedingung (C) nicht erfüllt ist.

**11.** Modularer Umrichter (10) zum Versorgen mindestens eines elektrischen Motors (26) mit einer Gleichstromausgangsspannung (84),
wobei der modulare Umrichter (10) mehrere Umrichterzellen (36) aufweist, die in Serie an einer ersten Seite verbunden sind und die an einer zweiten Seite verbunden sind;
wobei jede Umrichterzelle (36) einen Wechselstrom-Gleichstrom-Umrichter (40) zum Umwandeln einer ersten Seiten-Wechselspannung (80) in eine erste Seiten-Gleichspannung (82) und einen Gleichstrom-Gleichstrom-Umrichter (42) zum Umwandeln der ersten Seiten-Gleichspannung (82) in eine zweite Seiten-Gleichspannung (84) aufweist;
wobei der modulare Umrichter (10) eine Steuerung (70, 72) nach einem der Ansprüche 9 bis 10 zum Steuern mindestens eines des Gleichstrom-Gleichstrom-Umrichters (42) der Umrichterzelle (36) aufweist.

**12.** Modularer Umrichter (10) nach Anspruch 11, wobei der modulare Umrichter (10) lokale Steuerungen (70) aufweist, wobei jede lokale Steuerung einer Umrichterzelle (36) zugeordnet ist und zum Steuern des Gleichstrom-Gleichstrom-Umrichters (42) der Umrichterzelle (36) ausgeführt ist.

**13.** Modularer Umrichter (10) nach Anspruch 11 oder 12, wobei der modulare Umrichter (10) eine Hauptsteuerung (72) aufweist, die zum Steuern mindestens zwei Gleichstrom-Gleichstrom-Umrichter (42) der Umrichterzellen (36) ausgeführt ist.

**Revendications**

**1.** Procédé permettant de contrôler un convertisseur CC-CC (42),
le convertisseur CC-CC (42) comprenant un convertisseur CC-CA (52) et un convertisseur CA-CC (56) connectés en série avec un transformateur (54), à la fois le convertisseur CC-CA et le convertisseur CA-CC comprenant des commutateurs à semiconducteur (58, 62) ;
le procédé étant **caractérisé par** les étapes de :

détermination d'une tension d'entrée CC (82) et d'une tension de sortie CC (84) du convertisseur CC-CC (42) ;
détermination pour savoir si une condition de commutation (C) basée sur la tension d'entrée CC (82) et la tension de sortie CC (84) est remplie ;
génération d'un signal de commutation (98, 100) avec des impulsions de commutation (140, 142) pour commuter les commutateurs à semiconducteur (58, 62) d'au moins un convertisseur parmi le convertisseur CC-CA (52) et le convertisseur CA-CC (56), la génération d'impulsions de commutation (140, 142) étant bloquée lorsque la condition de commutation (C) n'est pas remplie,
la condition de commutation (C) étant basée sur la différence de la tension d'entrée CC (82) et de la tension de sortie CC (84), et
la condition de commutation (C) étant basée sur un courant de sortie (86) du convertisseur CC-CC (42) et/ou d'une puissance transférée du convertisseur CC/CC (42) .

**2.** Procédé de la revendication 1,
dans lequel le signal de commutation (98, 100) comprend des impulsions de commutation régulières (140, 142) qui commencent régulièrement par rapport à un laps de temps (T) du signal de commutation ; et/ou
dans lequel les impulsions de commutation régulières (140, 142) ont une longueur égale à la moitié de la période de commutation (T).

**3.** Procédé de la revendication 2,
dans lequel le signal de commutation (98, 100) comprend des impulsions de commutation réduites (144) qui sont plus courtes que les impulsions de commutation régulières ; et/ou
dans lequel les impulsions de commutation réduites (144) ont la moitié de la longueur des impulsions de commutation régulières.

**4.** Procédé de la revendication 3,
dans lequel une impulsion de commutation réduite (144) est générée, lors du passage d'un signal de commutation bloqué à un signal de commutation non bloqué.

**5.** Procédé de l'une des revendications précédentes,
dans lequel le signal de commutation (98, 100) comprend des impulsions de commutation (140) pour commuter un commutateur à semiconducteur supérieur et des impulsions de commutation (142) pour commuter un commutateur à semiconducteur inférieur ;
dans lequel le nombre d'impulsions de commutation réduites (144) pour le commutateur à semiconducteur supérieur est égal au nombre d'impulsions de commutation réduites pour le commutateur à semiconducteur inférieur ;
et ou

dans lequel le nombre d'impulsions de commutation complètes (144) pour le commutateur à semiconducteur supérieur est égal au nombre d'impulsions de commutation complètes pour le commutateur à semiconducteur inférieur.

6. Procédé de l'une des revendications précédentes, comprenant en outre les étapes de :

génération d'un signal de commutation non filtré (92, 94) ;
formation du signal de commutation (98, 100) appliqué aux commutateurs à semiconducteurs (58, 62) grâce au blocage du signal de commutation non filtré, lorsque la condition de commutation (*C*) n'est pas remplie.

7. Procédé de la revendication 6, comprenant en outre les étapes de :

blocage du signal de commutation non filtré (92, 94) à l'aide d'une machine à états finis (120) ayant au moins un état de déblocage (S1, S3), dans lequel le signal non filtré n'est pas bloqué et au moins un état de blocage (S2, S4) dans lequel le signal non filtré est bloqué ;
réalisation d'une transition de la machine à états finis (120) depuis un état de déblocage (S1, S3) jusqu'à un état de blocage (S2, S4), lorsque la condition de commutation (*C*) n'est pas remplie, et la réalisation d'une transition de la machine à états finis depuis un état de blocage jusqu'à un état de déblocage, lorsque la condition de commutation est remplie.

8. Procédé de la revendication 7, comprenant en outre les étapes de :

réalisation d'une transition de la machine à états finis (120) depuis un premier état de déblocage (S1) jusqu'à un premier état de blocage (S2), lorsque la condition de commutation (*C*) n'est pas remplie au milieu d'un laps de temps (*T*) du signal de commutation non filtré (92, 94) ;
réalisation d'une transition de la machine à états finis (120) depuis le premier état de blocage (S2) jusqu'à un deuxième état de déblocage (S3), lorsque la condition de commutation (*C*) est remplie aux trois-quarts du laps de temps (*T*) ;
réalisation d'une transition de la machine à états finis (120) depuis le deuxième état de déblocage (S3) jusqu'à un deuxième état de blocage (S4), lorsque la condition de commutation (*C*) n'est pas remplie à la fin du laps de temps (*T*) ;
réalisation d'une transition de la machine à états finis (120) depuis le deuxième état de déblocage (S4) jusqu'au premier état de déblocage (S1), lorsque la condition de commutation (*C*) est remplie au quart du laps de temps (*T*).

9. Contrôleur (70, 72) d'un convertisseur CC-CC (42), dans lequel le contrôleur est conçu pour réaliser le procédé de l'une des revendications 1 à 8.

10. Contrôleur (70, 72) de la revendication 9, comprenant :

un générateur d'impulsions (90) pour générer un signal de commutation non filtré (92, 94) ;
un filtre d'impulsions (96) pour bloquer le signal de commutation non filtré, lorsque la condition de commutation (*C*) n'est pas remplie.

11. Convertisseur modulaire (10) pour alimenter au moins un moteur électrique (26) avec une tension de sortie CC (84),
le convertisseur modulaire (10) comprenant une pluralité de cellules de convertisseur (36) qui sont connectées en série sur un premier côté et sont connectées sur un deuxième côté ;
chaque cellule de convertisseur (36) comprenant un convertisseur CA-CC (40) pour convertir une tension CA de premier côté (80) en une tension CC de premier côté (82), et un convertisseur CC-CC (42) pour convertir la tension CC de premier côté (82) en une tension CC de deuxième côté (84) ;
le convertisseur modulaire (10) comprenant un contrôleur (70, 72) selon l'une des revendications 9 ou 10 pour contrôler au moins un des convertisseurs CC-CC (42) des cellules de convertisseur (36).

12. Convertisseur modulaire (10) de la revendication 11, le convertisseur modulaire (10) comprenant des contrôleurs locaux (70), chaque contrôleur local étant associé à une cellule de convertisseur (36) et étant conçu pour contrôler le convertisseur CC-CC (42) de la cellule de convertisseur (36).

13. Convertisseur modulaire (10) de la revendication 11 ou 12,
le convertisseur modulaire (10) comprenant un contrôleur principal (72), qui est conçu pour contrôler au moins deux convertisseurs CC-CC (42) des cellules de convertisseur (36).

Fig. 1

36

80    40    82    42    84

98    100    84

82    86

96  92    94

90

70,72

Fig. 2

110

112

114

Fig. 3

120

T=25%,C=1    S1 +    T=50%,C=0

S4 −    S2 −

T=100%,C=0    S3 +    T=75%,C=1

Fig. 4

Fig. 5

Fig. 6

**REFERENCES CITED IN THE DESCRIPTION**

**Patent documents cited in the description**

- DE 102010044322 A1